# EUROPÄISCHE PATENTSCHRIFT

(11) **EP 0 543 994 B1**
(45) Veröffentlichungstag und Bekanntmachung des Hinweises auf die Patenterteilung: **02.01.1997**
(21) Anmeldenummer: 92915589.3
(22) Anmeldetag: 18.06.1992
(51) Int. Cl.: G02B 6/38, G02B 6/44

(54) **STECKVERBINDUNG FÜR LICHTWELLENLEITER**
PLUG-TYPE CONNECTOR FOR BEAM WAVEGUIDES
CONNECTEUR A FICHES POUR GUIDES D'ONDES LUMINEUSES

(30) Priorität: 18.06.1991 DE 4120038
(43) Veröffentlichungstag der Anmeldung: 02.06.1993
(73) Patentinhaber: Philips Patentverwaltung GmbH, 22335 Hamburg (DE); Philips Electronics N.V., 5621 BA Eindhoven (NL)
(72) Erfinder: KOPPE, Rudolf, Pieter, NL-4817 NB Breda (NL)
(74) Vertreter: Stolk, Steven Adolph
(86) Internationale Anmeldenummer: NL9200106
(87) Internationale Veröffentlichungsnummer: WO9222841

(56) Entgegenhaltungen:
- EP-A- 0 205 984
- EP-A- 0 209 255
- EP-A- 0 360 304
- EP-A- 0 413 660
- GB-A- 2 164 760
- US-A- 4 877 303

## Beschreibung

Die Erfindung geht aus von einem Steckverbinder für Lichtwellenleiter nach dem Oberbegriff des Patentanspruchs 1, wie z.B. bekannt aus GB-A 2.164.760 und EP 413.660.

Die an sich seit langem bekannten Lichtwellenleiter werden erst seit kurzem verstärkt in der Nachrichtentechnik für vielfältige Anwendungsgebiete eingesetzt, wie beispielsweise FDDI-Netzwerke (fiber distributed data interface), Local Area Networks, Verbindungen zwischen Komputern, Telefonvermittlungen, Industriesteuerungen und Übertragungseinrichtungen für Fernsehkameras. Bekanntlich können die Lichtwellenleiter aus Mehrfaser- oder Einfaserleitern bestehen, wobei sich je nach Größe des Kerndurchmessers der Faser entweder mehrere Schwingungsformen, sog. Moden, oder auch nur eine Schwingungsform ausbreiten können. Sehr dünne Kerne von nur 10 µm oder weniger lassen nur eine Schwingungsform oder Mode zu. Die Einmode-Faserleitern erfordern Steckverbindungen zwischen den einzelnen Fasern bzw. zwischen dem Faserende und der Lichtquelle höchster Präzision mit Toleranzen im Mikrometerbereich. Diese Steckverbindungen bestehen meist aus zwei identischen Steckern mit Verdrehsicherung und einer Kupplung mit elastischer Hülse. Um eine optimale Übertragung sicherzustellen, befinden sich die Steckerendflächen in direktem physikalischen Kontakt. Da die heutigen Lichtwellenleiter nur noch eine sehr geringe Dämpfung (ca. 0,2 dB/km) aufweisen, müssen auch die bei Steckverbindern unvermeidlichen Verluste, die mit der Einfügungsdämpfung beschrieben werden, so niedrig wie möglich sein. Nach neuesten Entwicklungen dürften in der Anwendungspraxis dafür bis zu einer unteren Grenze von ca. 0,2 dB erreichbar sein.

Bei der nachrichtentechnischen Kabelverbindung, beispielsweise einer HDTV-Kamera und deren Betriebsgerät oder Prozessoreinheit, können Verbindungsleitungslängen der Lichtwellenleiter von bis zu mehreren Kilometern notwendig sein, welche je nach Anwendungsfall und Einsatzgebiet aus mehreren, z. T. unterschiedlich langen Leitungsstücken über Steckverbindungen zusammengesetzt werden. Um insbesondere bei der Aufnahme von Ereignissen außerhalb eines Studios, beispielsweise von Sportveranstaltungen im Freien mit der Überbrückung der Entfernung zwischen Kamera und Prozessoreinheit bei unterschiedlichen Einsatzorten so flexibel wie möglich zu sein, hat es sich als zweckmäßig erwiesen, eine entsprechende Anzahl bereits vorgefertigter, mit Steckerstiften versehener Lichtleiterstücke zusammenzustecken. Hierbei kann es jedoch vorkommen, daß beim schnellen Zusammenstecken der einzelnen Lichtleiterstücke die gegen Verunreinigungen sehr empfindlichen optischen Übergänge der Steckerstifte, beispielsweise durch aufgewirbelten Staub oder Schmutz, beschädigt werden können. Dann ist es notwendig, diese Leitungsstücke mit den entsprechenden beschädigten Steckerstiften gegen andere Leitungsstücke mit unbeschädigten Steckerstiften auszutauschen; denn ein Austausch von Steckerstiften an Leitungsenden von Einmoden-Faserleitungen ist nur im Herstellerwerk mit Spezialwerkzeugen möglich. Das ist jedoch sehr aufwendig und zeitraubend.

Der vorliegenden Erfindung liegt daher die Aufgabe zugrunde, eine Steckverbindung für Lichtwellenleiter der eingangs genannten Art anzugeben, deren Steckerteil bei Beschädigungen in einfacher Weise und kostengünstig auswechselbar ist. Diese Aufgabe wird durch die im Kennzeichen des Patentanspruchs 1 angegebenen Merkmale gelöst.

Die erfindungsgemäße Anordnung mit den kennzeichnenden Merkmalen des Patentanspruchs 1 hat den Vorteil, daß bei Beschädigung eines Steckerteils lediglich zwei miteinander verbundene Steckerteile getauscht zu werden brauchen, ohne das ganze zu verbindende Faserleiterkabel austauschen zu müssen.

Besonders vorteilhaft ist, daß jeder der Steckerstifte der mittleren Steckverbindung mit dem entsprechenden jeweils anderen Steckerstift der beiden äußeren Steckverbinder jeweils eine auswechselbare Einheit bildet. Somit brauchen nur diese kleinen Einheiten bei dem Aufbau einer Verbindung im Falle der Außenübertragung als Ersatz bereitgehalten zu werden.

Ausführungsbeispiele der Erfindung sind in der Zeichnung dargestellt und in der nachfolgenden Beschreibung näher erläutert. Es zeigen:
Fig. 1 das Prinzip einer herkömmlichen Steckverbindung,
Fig. 2 das Prinzip einer Steckverbindung,
Fig. 3 eine Variante des erfindungsgemäßen Prinzips,
Fig. 4 eine weitere Variante,
Fig. 5 eine Variante mit Kupplungskugel im Prinzip,
Fig. 6 eine weitere Variante mit Kupplungskugel.

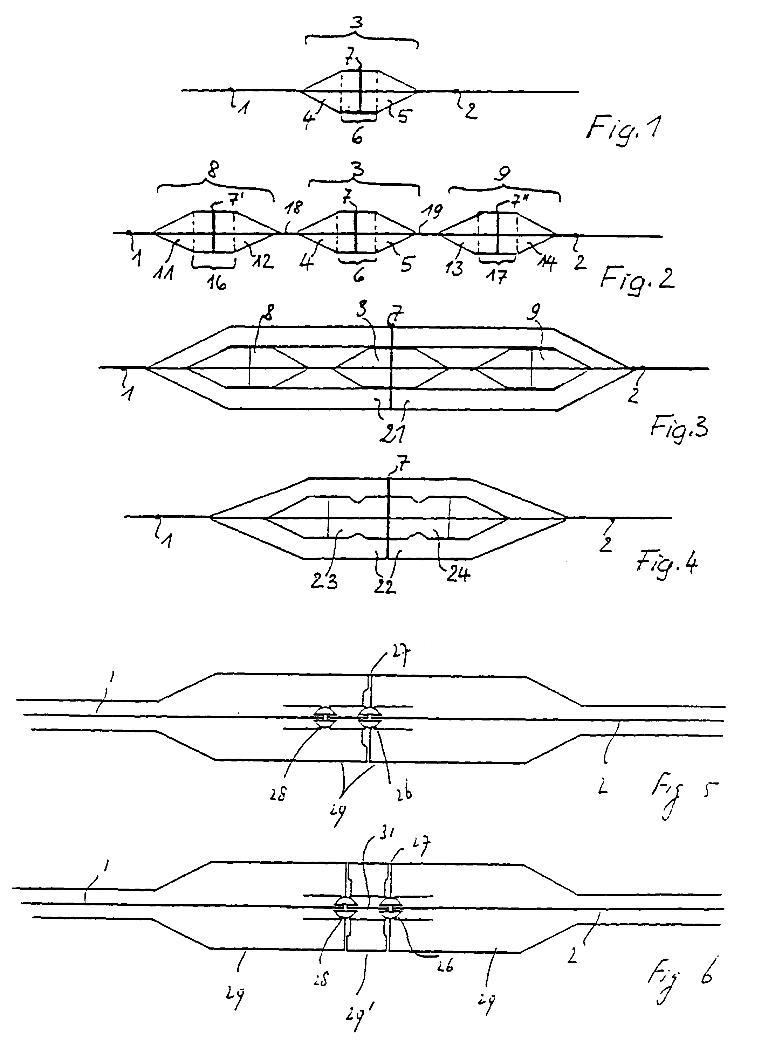

Bei dem in Fig. 1 dargestellten Prinzip einer herkömmlichen Steckverbindung ist ein Lichtwellenleiter 1 - beispielsweise als Einmoden-Faserleiter von ca. 500 m Länge - mit einem entsprechenden weiteren Lichtwellenleiter 2 über eine Steckverbindung 3, bestehend aus einem ersten mit dem Leiter 1 verbundenen Steckerteil 4, einem zweiten mit dem Leiter 2 verbundenen Steckerteil 5 sowie aus einer Kupplungshülse 6, verbunden. Die Kupplungshülse kann z.B. mittels Schraubverbindungen mit beiden Steckerteilen verbunden werden. An der Stelle 7 ist eine Auftrennung dieser Steckverbindung 3 möglich. Wie bereits oben ausgeführt, kann es dabei vorkommen, daß eines der Steckerteile 4 bzw. 5 nach der Auftrennung durch in den Stecker eingebrachten Schmutz oder Staub beim Wiederverbinden beschädigt wird. Dieses gilt insbesondere für die sehr empfindlichen Endflächen der Lichtwellenleiter, die nach dem Wiederverbinden einander berühren. In diesem Fall muß zunächst das gesamte Kabel mit dem beschädigten Steckerteil ausgewechselt werden, da ein Auswechseln des Steckerteils am Kabel nur im Herstellerwerk möglich ist.

Zur Vermeidung dieses Nachteiles wird gemäß einer Ausführungsform nach Fig. 2 vorgeschlagen, daß anstelle der einen Steckverbindung zwischen den Leitern 1 und 2 drei Steckverbindungen 3, 8 und 9 angeordnet werden. Auch diese Steckverbindungen 8 und 9 bestehen aus je einem Steckerteil 11 und 12 bzw. 13 und 14 sowie einer Kupplungshülse 16 bzw. 17. Die Steckverbindungen 8 und 3 bzw. 3 und 9 sind dabei jeweils über ein kurzes Leitungsstück 18 bzw. 19 einer entsprechenden Faserleitung verbunden. Zur Auftrennung der Verbindung der Leitungen 1 und 2 wird auch hier wiederum die Steckverbindung 3 an der Stelle 7 benutzt. Bei Beschädigung eines der Steckerteile 4 bzw. 5 kann dann durch Austausch der als Ersatz bereits vorgefertigten Teile 4, 18 und 22 bzw. 5, 19 und 13 der Schaden in kurzer Zeit und ohne großen Aufwand behoben werden.

Eine interessante Variante der erfindungsgemäßen Anordnung ist in Fig. 3 schematisch dargestellt, wobei die Steckverbindungen 3, 8 und 9 in einem an der Stelle 7 trennbaren Gehäuse 21 untergebracht sind. Diese können beispielsweise mit Schrauben in dem Gehäuse befestigt sein, so daß bei einem Austausch von beschädigten Steckverbindungsteilen lediglich eine oder mehrere Schrauben gelöst zu werden brauchen, um diese Teile aus dem Gehäuse entfernen zu können. Die zwei Teile des Gehäuses 21 können auch hier mittels einer - nicht dargestellten - Kupplungshülse verbunden werden.

In Fig. 4 ist eine weitere vorteilhafte Variante der erfindungsgemäßen Steckverbindung dargestellt. Bei dieser Anordnung sind die Steckerteile 4 und 12 sowie die Verbindungsleitung 18 zu einem, im wesentlichen einen durchgehenden Steckerstift bildenden Steckteil 23 zusammengefaßt. Ein entsprechendes Steckteil 24 umfaßt dann die Steckerteile 5 und 13 sowie die Verbindungsleitung 19. Auch hier kann bei Beschädigung eines der Steckverbindungen 23 bzw. 24 dieses leicht ausgetauscht werden. Ein solches Steckteil umfaßt z.B. eine kurze Faserleitung, die in einer Hülse geklemmt oder verklebt ist, und das man in einfacher Weise in oder aus Stechgehäuse 22 schrauben kann.

Eine andere Art der Steckverbindung ist in Figur 5 schematisch dargestellt. Hierbei ist für die Verbindung der Faserleiterstecker anstelle der Kupplungshülse eine Kupplungskugel 26 im Bereich der Trennstelle 27 sowie eine weitere Kupplungskugel 28 für die Steckverbindung mit dem Leiter 1 vorgesehen. Die Kupplungskugel 26 bzw. 28 besteht im Prinzip aus einer Metall-, z.B. Stahlkugel, mit einer Lochdurchführung zur Aufnahme der beiden Steckerteile wobei im Berührungsbereich der beiden Steckerteile eine Schutzschicht in Form eines plastischen optischen Materials vorgesehen wird, welches den gleichen Brechnungsindex wie die angeschlossene Glasfaserleitung hat. Die Steckverbindungen mit den Kugeln 26, 28 sind wiederum in einem Gehäuse 29 untergebracht. Beim Auftrennen der Steckverbindung an der Stelle 27 verbleibt die Kupplungskugel 26 im rechten Gehäuseteil, so daß hierbei der Steckerteil des Leiters 2 im allgemeinen nicht beschädigt werden kann. Bei einer möglichen Beschädigung des Steckerteils 25 ist dieses leicht auswechselbar. Selbstverständlich können auch die Kupplungskugeln 26 bzw. 28 ausgewechselt werden. Die Gehäuseteile der Steckverbindung gemäss Figur 5 haben eine unterschiedliche Konfiguration. Sie werden mit einer (nicht dargestellte) Kupplungshülse verbunden.

Die in Fig. 6 schematisch dargestellt Variante einer Steckverbindung mit Kupplungskugeln 26 und 28 weist ein Zwischensteckerteil 31 in einem Gehäuse 29' auf, welches bei Beschädigung eines der Steckerteile für die Kugel 26 bzw. für die Kugel 28 ebenfalls leicht austauschbar ist. Gehäuseteil 29' funktioniert vorzugsweise als eine Kupplungshülse, die z.B. mittels Schraubverbindungen mit den Gehäuseteilen 29 verbunden wird. Statt Teil 31 kann selbstverständlich auch Gehäuseteil 29' ausgetauscht werden. Auch hierbei sind die bei Auftrennung der Steckverbindung im Bereich 27 in den Gehäuseteilen 29 verbleibenden Kupplungskugeln 26 bzw. 28 leicht auswechselbar. Die Kupplungskugeln enthalten wieder ein plastisches optisches Material in Form einer Schutzschicht. Diese Schicht schutzt die Endfläche der Glasfaserleitungen 1, 2 für Beschädigungen.

Es wird bemerkt, daß die Steckverbindungen nach der heutigen Erfindung neben Glasfaseranschlüße auch elektrische Anschlüße enthalten kann.

## Patentansprüche

1. Steckverbindersystem für die Verbindung von zwei Lichtfaserleitungen (1, 2), welche jeweils mit einem leitungsseitigen Steckerstift (11,14) der mit dem Ende der Faserleitung fest verbunden ist, versehen sind,
wobei drei hintereinander angeordnete voneinander lösbare Steckverbindungen (8,3,9) in einem gemeinsamen Gehäuse (21) untergebracht sind, welches Gehäuse im Bereich der mittleren Steckverbindung (3) trennbar ist, wobei die Steckverbindungen jeweils aus einer Kupplungshülse (6,16,17) und zwei damit verbundenen Steckerstiften (4,5,11,12,13,14) bestehen,
wobei die beiden äußeren Steckverbindungen (8,9) die beiden leitungsseitigen Steckerstifte (11,14) jeweils über eine zugehörige Kupplungshülse (16,17) mit einem ersten Steckerstift (13,12) eines Steckverbindungsteils (23,24) verbinden, wobei jeweils ein Steckverbindungsteil zwischen den äußeren (8,9) und der mittleren Steckverbindung (3) angeordnet ist, wobei jedes Steckverbindungsteil (23,24) beidseitig einen Steckerstift aufweist und wobei die mittlere Steckverbindung über eine mittlere Kupplungshülse (6) jeweils den anderen Steckerstift der Steckverbinderteile (23,24) verbindet,
so daß zur Auftrennung der Faserleitung nur die mittlere Steckverbindung zu lösen ist und die Steckverbindungsteile (23,24) auswechselbar sind.

2. Steckverbindungssystem nach Anspruch 1, wobei beide Steckverbindungsteile (23,24) kurze Faserleiterstücke (18,19) enthalten, die sich zwischen den beidseitigen angeordneten Steckerstiften (4,12,5,13) erstrecken.

3. Steckverbindungssystem nach Anspruch 2, wobei die Steckverbinderteile (23,24) je einen die Faserleitungsstücke (18,19) beinhaltenden durchgehenden Steckerstift aufweisen.

4. Steckverbindungssystem nach Anspruch 1, wobei die Kupplungshülsen als Kupplungskugel (26,28) ausgebildet sind, die eine Lochdurchführung für die Steckerstifte aufweisen, in deren Bereich ein plastisches optisches Material vorgesehen ist, das einen entsprechenden Brechungsindex aufweist und wobei für die Steckverbindungen zwei direkt hintereinander angeordnete Kupplungskugeln (26,28) vorgesehen sind, so daß die Trennung des Steckverbindersystems im Bereich (27) einer der Kupplungskugeln (26) erfolgt, die bei der Trennung der Steckverbindung an dem direkt mit dem Faserleiter verbundenen Steckverbindungsteil verbleibt.

5. Steckverbindungssystem nach Anspruch 4, wobei das zwischen den Kupplungskugeln (26,28) befindliche Steckverbindungsteil (29') bei Auftrennung des Steckverbindung im Bereich beider Kupplungskugeln (26, 28) auswechselbar ist.

6. Steckverbindungssystem nach Anspruch 5, wobei die Kupplungskugeln (26, 28) auswechselbar sind.

## Claims

1. A connector system for interconnecting two optical fibres (1,2), each comprising a connector pin (11,14), which is situated on the side of the fibre, and which is fixedly secured to the fibre end, in which three detachable connectors (8,3,9) are arranged one after the other and accommodated in acommon housing (21) which can be divided at the area of the central connector (3), each connector comprising a coupling sleeve (6,16,17) and two connector pins (4,5,11,12,13,14) which are connected thereto, in which the two outer connectors (8,9) connect the two connector pins (11,14), situated on the side of the fibre, to a first connector pin (13,12) of a connector portion (23,24) by means of an associated coupling sleeve (16,17), a connector portion being arranged between the outer connector (8,9) and the central connector (3), in which each connector portion (23,24) is provided with a connector pin on either side, and in which the central connector is connected to each of the other connector pins of the connector portions (23,24) via a central coupling sleeve (6), so that the fibre can be divided by disconnecting the central conductor portions and the conductor portions (23,24) can be exchanged.

2. A connector system as claimed in Claim 1, in which both connector portions (23,24) comprise short lengths of fibres (18,19), which extend between the connector pins (4,12,5,13) arranged on either side.

3. A connector system as claimed in Claim 2, in which each one of the connector portions (23,24) comprises a continuous connector pin accommodating the fibre portion (18,19).

4. A connector system as claimed in Claim 1, in which coupling balls (26 and 28) having a bore for the connector pins are used as the coupling sleeves, a plastic optical material having the same refractive index being provided at the area of the bore and in which for the purpose of interconnecting two fibres two coupling balls (26,28) are provided which are arranged directly behind each other, so that the connector pair is disconnected at the area (27) of one of the coupling balls (26), said coupling ball forming part of the connector portion which is directly connected to the fibre.

5. A connector system as claimed in Claim 4, in which the connector portion (29') located between the coupling balls (26,28) can be replaced when the connector pair is disconnected at the area of the two coupling balls (26,28).

6. A connector system as claimed in Claim 5, in which the coupling balls (26,28) can be replaced.

## Revendications

1. Système de connecteur à fiche pour la connexion de deux conducteurs de fibres optiques (1, 2) qui sont respectivement dotés d'un connecteur mâle (11, 14) côté conducteur qui est fixé à demeure avec l'extrémité du conducteur de fibres,
où trois connecteurs à fiche (8, 3, 9) détachables l'un de l'autre et disposés l'un derrière l'autre sont logés dans un boîtier commun (21), lequel boîtier est détachable à hauteur du connecteur à fiche central (3), les connecteurs à fiche se composant respectivement d'un manchon d'accouplement (6, 16, 17) et de deux connecteurs mâles fixés à celui-ci (4, 5, 11, 12, 13, 14),
où les deux connecteurs à fiche externes (8, 9) relient respectivement les deux connecteurs mâles (11, 14) côté conducteur par l'intermédiaire d'un manchon d'accouplement correspondant (16, 17) avec un premier connecteur mâle (13, 12) d'une partie du connecteur à fiche (23, 24), où une partie du connecteur à fiche est respectivement disposée entre le connecteur à fiche externe (8, 9) et le connecteur à fiche central (3),
où chaque partie du connecteur à fiche (23, 24) présente de part et d'autre un connecteur mâle, et
où le connecteur à fiche central est respectivement relié à l'autre connecteur mâle des parties du connecteur à fiche (23, 24) par l'intermédiaire d'un manchon d'accouplement central (6),
de telle sorte qu'il faut seulement desserrer le connecteur à fiche central en vue de la séparation du conducteur de fibres et les parties du connecteur à fiche (23, 24) peuvent être remplacées.

2. Système de connecteur à fiche selon la revendication 1, où les deux parties du connecteur à fiche (23, 24) contiennent des parties courtes du conducteur de fibres (18, 19) qui s'étendent entre les connecteurs mâles (4, 12, 5, 13) disposés de part et d'autre.

3. Système de connecteur à fiche selon la revendication 2, où les parties du connecteur à fiche (23, 24) présentent respectivement un connecteur mâle traversant contenant les parties du connecteur de fibres (18, 19).

4. Système de connecteur à fiche selon la revendication 1, où les manchons d'accouplement sont conçus comme des billes d'accouplement (26, 28) qui présentent un orifice de passage pour les connecteurs mâles dans la région duquel est prévu un matériau optique plastique qui présente un indice de réfraction correspondant et deux billes d'accouplement (26, 28) disposées directement l'une derrière l'autre étant prévues pour les connecteurs à fiche, de telle sorte que la séparation du système de connecteur à fiche intervienne dans la région (27) d'une des billes d'accouplement (26) qui, lors de la séparation du connecteur à fiche, reste contre la partie du connecteur à fiche reliée directement au conducteur de fibres.

5. Système de connecteur à fiche selon la revendication 4, où la partie du connecteur à fiche (29') se trouvant entre les billes d'accouplement (26, 28) peut être remplacée lors de la séparation du connecteur à fiche dans la région des deux billes d'accouplement (26, 28).

6. Système de connecteur à fiche selon la revendication 5, où les billes d'accouplement (26, 28) peuvent être remplacées.
